# EUROPÄISCHE PATENTSCHRIFT

(11) **EP 3 868 204 B1**
(45) Veröffentlichungstag und Bekanntmachung des Hinweises auf die Patenterteilung: **11.10.2023**
(21) Anmeldenummer: 20159066.8
(22) Anmeldetag: 24.02.2020
(51) Int. Cl.: A01M 7/00, A01C 7/08, A01C 15/00

(54) **LANDWIRTSCHAFTLICHE MASCHINENKOMBINATION**
AGRICULTURAL MACHINE COMBINATION
COMBINAISON DE MACHINES AGRICOLES

(43) Veröffentlichungstag der Anmeldung: 25.08.2021
(73) Patentinhaber: Kverneland Group Soest GmbH, 59494 Soest (DE)
(72) Erfinder: NEUMANN, Björn, 4353 Klepp Stasjon (NO)
(74) Vertreter: Bittner, Thomas L.

(56) Entgegenhaltungen:
- DE-A1- 3 540 198
- DE-A1-102010 017 753
- DE-A1-102016 125 336
- DE-U1-202010 007 812

## Beschreibung

### Hintergrund

Landwirtschaftliche Maschinenkombinationen mit einem Ackerschlepper und einer Verteilmaschine, die an dem Ackerschlepper angeordnet ist, dienen dazu, ein auszubringendes Material im Feldeinsatz über den Boden zu verteilen. Bei der Verteilmaschine kann es sich beispielsweise um einen Düngerstreuer, eine Sämaschine oder eine Sprühmaschine handeln. Auch Kombinationen solcher Verteilmaschinen können am Ackerschlepper vorgesehen sein. Es ist hierbei bekannt, das auszubringende Material in einem Materialtank bereitzustellen, der am Ackerschlepper frontseitig angeordnet ist. Das auszubringende Material wird über eine Förderleitung zur Verteileinrichtung der Verteilmaschine gebracht oder transportiert, um es dann mit der Verteileinrichtung auf den Boden auszubringen.

Im Dokument DE 10 2016 125 336 A1 ist eine landwirtschaftliche Maschinenkombination dieser Art offenbart. Auch im Dokument DE 10 2010 017 753 A1 ist eine landwirtschaftliche Maschinenkombination beschrieben, bei der das auszubringende Material aus einem am Ackerschlepper frontseitig angeordneten Materialtank über eine Förderleitung zur heckseitigen Verteileinrichtung transportiert wird.

Bei bekannten Maschinenkombinationen sind in der Förderleitung flexible Rohrabschnitte vorgesehen, um das Anheben und Absenken des Materialtanks zu ermöglichen.

Aus dem Dokument DE 20 2010 007 812 U1 ist ein Ackerschlepper mit einem Frontlader bekannt, wobei auf der Aufnahme des Frontladers ein Vorratsbehälter anordbar ist. Am Heck des Schleppers ist ein Heckbehälter mit einer daran angeschlossenen Verteileinrichtung, insbesondere ein Düngerbehälter mit einem Düngerstreuer, angeordnet, wobei zwischen Vorratsbehälter und Heckbehälter eine Rohrverbindung vorgesehen ist. Die Rohrverbindung ist in zwei Rohrabschnitte teilbar, wobei der erste vordere Rohrabschnitt mit dem zweiten hinteren Rohrabschnitt bei Anheben des Frontladers verbindbar ist.

Dokument DE 35 40 198 A1 offenbart einen Zusatztank zum kontinuierlichen oder portionsweisen Nachfüllen von Vorratsbehältern von Verteilmaschinen mittels pneumatischer Förderung, wobei zwischen den Dosierorganen des Zusatztanks und dem Vorratsbehälter der Verteilmaschine zumindest ein Schlauch angeordnet ist. Der Zusatztank weist zwei trichterförmige Behälterspitzen auf, derart, dass für jede Behälterspitze ein Dosierorgan vorgesehen ist und von jedem Dosierorgan aus ein Schlauch zum Vorratsbehälter der Verteilmaschine geführt ist.

### Zusammenfassung

Aufgabe der Erfindung ist es, eine landwirtschaftliche Maschinenkombination mit einem Ackerschlepper und einer hieran gebildeten Verteilmaschine bereitzustellen, bei der Betriebsstörungen verbessert vermieden sind, insbesondere das auszubringende Material störungsfrei zwischen Materialtank und Verteileinrichtung transportiert werden kann.

Zur Lösung der Aufgabe ist eine landwirtschaftliche Maschinenkombination nach dem unabhängigen Anspruch 1 geschaffen. Ausgestaltungen sind Gegenstand von abhängigen Unteransprüchen.

Nach einem Aspekt ist eine landwirtschaftliche Maschinenkombination mit einem Ackerschlepper und einer Verteilmaschine geschaffen. Die Verteilmaschine weist Folgendes auf: einen Materialtank, der am Ackerschlepper frontseitig angeordnet und eingerichtet ist, ein zu verteilendes Material aufzunehmen; eine Verteileinrichtung, der am Ackerschlepper heckseitig angeordnet und eingerichtet ist, das zu verteilende Material auszubringen; und eine Förderleitung, die zwischen dem Materialtank und der Verteileinrichtung angeordnet und durch die hindurch das zu verteilende Material vom Materialtank zur Verteileinrichtung förderbar ist. Die landwirtschaftliche Maschinenkombination weist weiterhin eine Halte- und Hebeeinrichtung auf, mit der der Materialtank am Ackerschlepper frontseitig gehalten wird, derart, dass der Materialtank mittels der Halte- und Hebeeinrichtung in verschiedene Höhenstellung oberhalb des Bodens verlagerbar ist. Ein starrer Leitungsrohrabschnitt der Förderleitung ist mittels einer Befestigungseinrichtung in einem Montagebereich am Ackerschlepper befestigt, derart, dass der starre Leitungsrohrabschnitt relativ zum Montagebereich sowohl schwenkbar wie auch in Längsrichtung des starren Leitungsrohrabschnitts verschiebbar ist, wenn der Materialtank mittels der Halte- und Hebeeinrichtung zwischen verschiedenen Höhenstellungen verlagert wird.

Die Förderleitung kann in verschiedenen Ausführungsformen aus einem Kunststoff- und / oder einem Metallmaterial bestehen.

Mit Hilfe der vorgesehenen Lagerung oder Aufnahme des starren Leitungsrohrabschnitts der Förderleitung im Montagebereich am Ackerschlepper ist es ermöglicht, dass sich der starre Leitungsrohrabschnitt beim Anheben und beim Absenken des Materialtanks relativ zum Montagebereich verlagern kann, sowohl aufgrund des Schwenkens wie auch (zusätzlich) einer linearen Verschiebebewegung. Der starre Leitungsrohrabschnitt führt hierbei relativ zum Montagebereich eine Schwenkbewegung und eine Linearbewegung aus. Daher kann der Einsatz von flexiblen Rohrabschnitten im Bereich der Förderleitung minimiert werden oder ganz unterbleiben, so dass die Förderleitung frei von flexiblen Rohrabschnitten ausgebildet werden kann, was einen störungsfreien Transport des auszubringenden Materials durch die Förderleitung unterstützt.

Der starre Leitungsrohrabschnitt kann mit einem der Förderleitung zugeordneten Materialausgang des Materialtanks starr verbunden sein. Die Förderleitung kann an dem Materialausgang des Materialtanks um eine Achse schwenkbar angeordnet sein, die im Wesentlichen senkrecht auf einer Öffnungsfläche des Materialausgangs steht. Eine solche Schwenkachse kann zum Beispiel quer zur Fahrtrichtung des Ackerschleppers verlaufen.

Die Befestigungseinrichtung kann in einem Montagebereich an einer Fahrerkabine des Ackerschleppers angeordnet sein. Die Befestigungseinrichtung kann im Bereich eines heckseitigen Teils der Fahrkabine des Ackerschleppers angeordnet sein. Die Befestigungseinrichtung kann an einem Rahmen der Fahrerkabine montiert sein. Allgemein kann der Montagebereich in einem hinteren oder heckseitigen Abschnitt des Ackerschleppers vorgesehen sein, sei es an der Fahrerkabine oder einem anderen Bauteil des Ackerschleppers.

Der starre Leitungsrohrabschnitt kann mit einem Knickabschnitt gebildet sein. Außerhalb des einen Knickabschnitts oder mehreren Knickabschnitten kann der starre Leitungsrohrabschnitt im Wesentlichen gerade verlaufen, also frei von gebogenen oder gekrümmten Rohrabschnitten sein.

Der starre Leitungsrohrabschnitt kann einen Bereich der Förderleitung zwischen dem Materialausgang und dem Montagebereich im Wesentlichen vollständig erfassend ausgebildet sein. Bei dieser Ausgestaltung erstreckt sich der starre Leitungsrohrabschnitt zumindest zwischen dem Materialausgang und dem Montagebereich. Bei dieser oder anderen Ausgestaltungen kann sich der starre Leitungsrohrabschnitt in heckseitiger Richtung über den Montagebereich und die hier montieret Befestigungseinrichtung hinaus erstrecken, also hiervon ausgehend nach hinten vor- oder überstehen.

Die Förderleitung kann zumindest entlang des starren Leitungsrohrabschnitts mit einer rutschfördernden oder -unterstützenden Innenoberfläche gebildet sein. Die Innenoberfläche kann hierbei als glatte Oberfläche ausgeführt sein. Insbesondere kann die rutschfördernde Innenoberfläche des starren Leitungsrohrabschnitts frei von gewellten Oberflächenabschnitten sein. Die rutschfördernde Innenoberfläche, insbesondere in einer glatten Ausführungsform, kann auch in einem oder mehreren Knickbereichen des starren Leitungsrohrabschnitts ausgebildet sein.

Die Förderleitung kann zwischen dem Materialtank und der Verteileinrichtung mit einer rutschfördernden Innenoberfläche gebildet sein.

Der starre Leitungsrohrabschnitt kann mit Rohrabschnitten mehrstückig gebildet sein, welche starr miteinander verbunden sind. Eine Verbindung zwischen benachbarten Rohrabschnitten des starren Leitungsrohrabschnitts kann zum Beispiel in einem Knickbereich vorgesehen sein. Die mehreren Rohrabschnitte können mittels einer Steckverbindung oder einer Schraubverbindung miteinander verbunden sein.

Zwischen einem heckseitigen Ende des starren Leitungsrohrabschnitts und einem der Förderleitung zugeordneten Materialeingang der Verteilmaschine kann ein flexibler Leitungsrohrabschnitt der Förderleitung angeordnet sein. Der flexible Leitungsrohrabschnitt kann mit einer flexiblen Schlauchleitung gebildet sein. Im Bereich des flexiblen Leitungsrohrabschnitts kann eine innere Oberfläche im Wesentlichen glatt ausgeführt sein, insbesondere frei von gewellten Abschnitten sein. Alternativ zum flexiblen Leitungsrohrabschnitt kann die Verbindung zum Materialeingang der Verteilmaschine hin mit einem weiteren starren Leitungsrohrabschnitt gebildet sein.

Der starre Leitungsrohrabschnitt kann mit einem vom Materialausgang des Materialtanks ausgehenden tankseitigen starren Leitungsrohrabschnitt, welcher an dem Materialtank und / oder einem Tragrahmen des Materialtanks gehalten wird, und einem hiermit starr verbundenen schlepperseitigen starren Anschlussrohrabschnitt gebildet sein, welcher mittels der Befestigungseinrichtung am Ackerschlepper gehalten wird. Der tankseitige starre Leitungsrohrabschnitt und der schlepperseitige starre Anschlussrohrabschnitt können in einer Ausführung über einen Knickbereich miteinander verbunden sein. Der schlepperseitige starre Anschlussrohrabschnitt kann sich bis zum Montagebereich hin erstrecken, wahlweise darüber hinaus.

Die Verteilmaschine kann einer Maschinenart aus der folgenden Gruppe entsprechend ausgebildet sein: Düngerstreuer, Sämaschine und Sprühmaschine. Je nach Ausgestaltung der Verteilmaschine ist die Verteileinrichtung eingerichtet, ein entsprechendes Material auszubringen. Insbesondere sind an der Verteileinrichtung entsprechende Ausbringorgane vorgesehen, zum Beispiel Düngerstreuer oder Sprühdüsen.

Mit Hilfe der vorgeschlagenen landwirtschaftlichen Maschinenkombination ist ein verfahren zum Fördern eines auszubringenden Materials aus dem frontseitig am Ackerschlepper angeordneten Materialtank zu einer Verteileinrichtung einer Verteilmaschine ausführbar, bei dem das auszubringende Material entlang eines starren Leitungsrohrabschnitts einer Förderleitung transportiert wird, welcher mittels einer Befestigungseinrichtung in einem Montagebereich am Ackerschlepper befestigt ist, derart, dass der starre Leitungsrohrabschnitt relativ zum Montagebereich sowohl geschwenkt wie auch in Längsrichtung des starren Leitungsrohrabschnitts verschoben werden kann, wenn der Materialtank mittels der Halte- und Hebeeinrichtung zwischen verschiedenen Höhenstellungen verlagert wird.

Auch ist ein hierzu ergänzendes oder alternatives Verfahren ausführbar, bei dem der starre Leitungsrohrabschnitt der Förderleitung relativ zum Montagebereich oder einem anderen Bezugspunkt am Ackerschlepper sowohl geschwenkt wie auch in Längsrichtung des starren Leitungsrohrabschnitts verschoben wird, wenn der Materialtank mittels der Halte- und Hebeeinrichtung zwischen verschiedenen Höhenstellungen verlagert wird.

### Beschreibung von Ausführungsbeispielen

Im Folgenden werden weitere Ausführungsbeispiele unter Bezugnahme auf Figuren einer Zeichnung näher erläutert. In den Figuren zeigen:
- Fig. 1: eine schematische Darstellung einer landwirtschaftlichen Maschinenkombination mit einem Ackerschlepper und einem Materialtank einer Verteilmaschine, der frontseitig an dem Ackerschlepper angeordnet ist, wobei der Materialtank in einer abgesenkten Stellung gezeigt ist; und
- Fig. 2: eine schematische Darstellung der landwirtschaftlichen Maschinenkombination aus Fig. 1, wobei der Materialtank in einer angehobenen Stellung gezeigt ist.

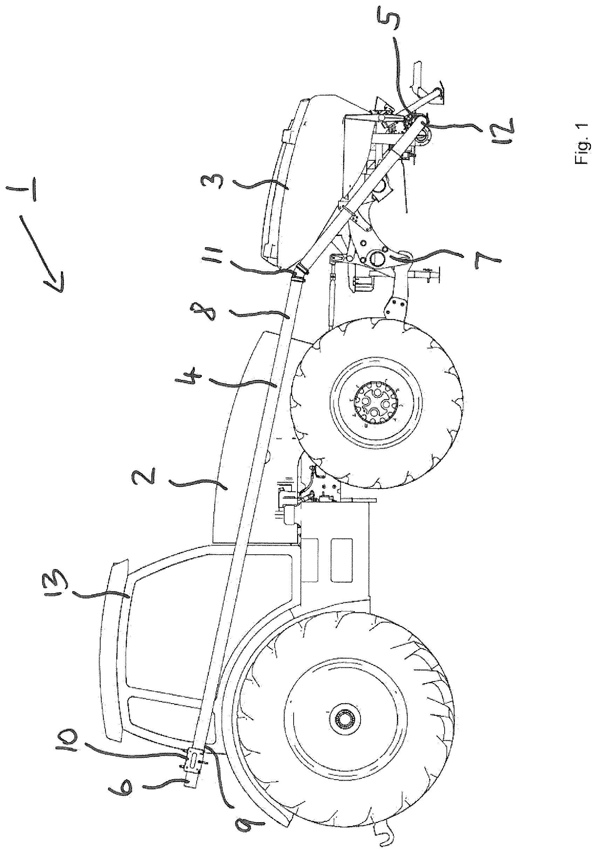

Fig. 1 zeigt eine schematische Darstellung einer landwirtschaftlichen Maschinenkombination 1 mit einem Ackerschlepper 2 von der Seite. An dem Ackerschlepper 2 ist frontseitig ein Materialtank 3 einer Verteilmaschine angeordnet. Mit Hilfe des Materialtanks 3 wird ein auszubringendes Material für die Verteilmaschine bereitgestellt, bei der eine zur Vereinfachung der Darstellung nicht gezeigte Verteileinrichtung das Ausbringen des Materials übernimmt. Üblicherweise ist die Verteileinrichtung heckseitig am Ackerschlepper 2 angeordnet, beispielsweise eine Verteileinrichtung zum Ausbringen eines Düngermaterials, eines Saatguts und / oder eines Sprühmaterials. Hierbei kann die Verteileinrichtung zum Beispiel mittels einer üblichen Dreipunkt-Lagerung am Ackerschlepper 2 aufgenommen sein.

Um das auszubringende Material aus dem frontseitig am Ackerschlepper 2 angeordneten Materialtank 3 zur rück- oder heckseitig angeordneten Verteileinrichtung zu bringen, ist eine Förderleitung 4 vorgesehen, die frontseitig an einen Materialausgang 5 des Materialtanks 3 koppelt, um hierüber das auszubringende Material aus dem Materialtank 3 aufzunehmen und es zu einem heckseitigen Ende 6 der Förderleitung 4 zu transportieren, von wo aus es (über einen zusätzlichen, nicht dargestellten Rohrabschnitt) zur Verteileinrichtung gelangen kann.

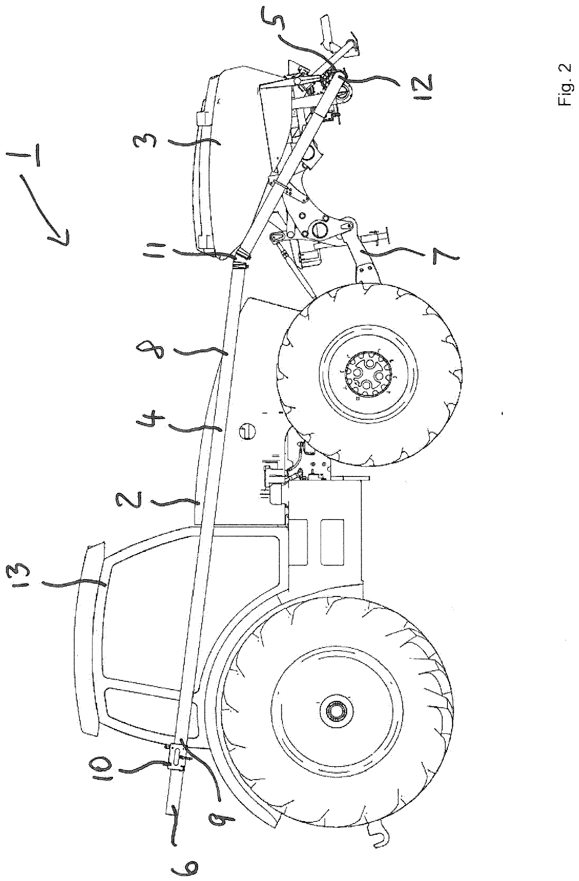

Fig. 1 und 2 zeigen für den Materialtank 3 unterschiedliche Höhenstellungen über dem Boden. Während der Materialtank 3 in Fig. 1 in einer abgesenkten Stellung ist, zeigt Fig. 2 eine angehobene Stellung des Materialtanks 3. Um eine solche Verlagerung des Materialtanks 3 mittels einer am Ackerschlepper 2 frontseitig vorgesehenen Halte- und Hebeeinrichtung 7 zu ermöglichen, ist ein starrer Leitungsrohrabschnitt 8 der Förderleitung 4 in einem Montagebereich 9 am Ackerschlepper 2 schwenkbar und in Längsrichtung des starren Leitungsrohrabschnitts 8 verschiebbar aufgenommen.

Gemäß den Fig. 1 und 2 bewirkt das Anheben des Materialtanks 3 ein Schwenken des starren Rohrleitungsabschnitts 8 relativ zum Montagebereich 9 sowie gleichzeitig ein Verschieben des heckseitigen Endes 6 der Förderleitung 4 nach hinten. Hierzu kann der starre Rohrleitungsabschnitt 8 einer Befestigungseinrichtung 10 in Längsrichtung des starren Rohrleitungsabschnitts 8 gleiten oder rutschen. Gleichzeitig stellt die Befestigungseinrichtung 10 oder deren Montage einen Dreh- oder Rotationspunkt zur Verfügung, um den sich der starre Rohrleitungsabschnitt 8 verschwenken kann. Dieses ermöglicht es, die Förderleitung 4 zumindest zwischen dem Materialausgang 5 des Materialtanks 3 und dem Montagebereich 9 starr auszubilden, insbesondere auch in einem Knickbereich 11. Hierbei kann vorgesehen sein, dass ein frontseitiges Ende 12 der Förderleitung 4 in dem Materialausgang 5 um eine Achse quer zur Fahrtrichtung schwenkbar gelagert ist.

Bei der gezeigten Ausführung ist die Befestigungseinrichtung 10 an einer Fahrerkabine 13 des Ackerschleppers 2 angeordnet.

Die in der vorstehenden Beschreibung, den Ansprüchen sowie der Zeichnung offenbarten Merkmale können sowohl einzeln als auch in beliebiger Kombination für die Verwirklichung der verschiedenen Ausführungen von Bedeutung sein.

## Patentansprüche

1. Landwirtschaftliche Maschinenkombination (1), mit:
- einem Ackerschlepper (2);
- einer Verteilmaschine, aufweisend
- einen Materialtank (3), der am Ackerschlepper (2) frontseitig angeordnet und eingerichtet ist, ein zu verteilendes Material aufzunehmen;
- eine Verteileinrichtung, der am Ackerschlepper (2) heckseitig angeordnet und eingerichtet ist, das zu verteilende Material auszubringen; und
- eine Förderleitung (4), die zwischen dem Materialtank (3) und der Verteileinrichtung angeordnet und durch die hindurch das zu verteilende Material vom Materialtank (3) zur Verteileinrichtung förderbar ist; und
- einer Halte- und Hebeeinrichtung (7), mit der der Materialtank (3) am Ackerschlepper (2) frontseitig gehalten wird, derart, dass der Materialtank (3) mittels der Halte- und Hebeeinrichtung (7) in verschiedene Höhenstellung oberhalb des Bodens verlagerbar ist;
**dadurch gekennzeichnet, dass**
ein starrer Leitungsrohrabschnitt (8) der Förderleitung (4) mittels einer Befestigungseinrichtung (10) in einem Montagebereich (9) am Ackerschlepper (2) befestigt ist, derart, dass der starre Leitungsrohrabschnitt (8) relativ zum Montagebereich (9) sowohl schwenkbar wie auch in Längsrichtung des starren Leitungsrohrabschnitts (8) verschiebbar ist, wenn der Materialtank (3) mittels der Halte- und Hebeeinrichtung (7) zwischen verschiedenen Höhenstellungen verlagert wird.

2. Landwirtschaftliche Maschinenkombination (1) nach Anspruch 1, **dadurch gekennzeichnet, dass** der starre Leitungsrohrabschnitt (8) mit einem der Förderleitung (4) zugeordneten Materialausgang (5) des Materialtanks (3) starr verbunden ist.

3. Landwirtschaftliche Maschinenkombination (1) nach Anspruch 1 oder 2, **dadurch gekennzeichnet, dass** die Befestigungseinrichtung (10) in einem Montagebereich (9) an einer Fahrerkabine (13) des Ackerschleppers (2) angeordnet ist.

4. Landwirtschaftliche Maschinenkombination (1) nach mindestens einem der vorangehenden Ansprüche, **dadurch gekennzeichnet, dass** der starre Leitungsrohrabschnitt (8) mit einem Knickabschnitt (11) gebildet ist.

5. Landwirtschaftliche Maschinenkombination (1) nach mindestens einem der vorangehenden Ansprüche, **dadurch gekennzeichnet, dass** der starre Leitungsrohrabschnitt (8) einen Bereich der Förderleitung (4) zwischen dem Materialausgang und dem Montagebereich (9) vollständig erfassend ausgebildet ist.

6. Landwirtschaftliche Maschinenkombination (1) nach mindestens einem der vorangehenden Ansprüche, **dadurch gekennzeichnet, dass** die Förderleitung (4) zumindest entlang des starren Leitungsrohrabschnitts (8) mit einer rutschfördernden Innenoberfläche gebildet ist.

7. Landwirtschaftliche Maschinenkombination (1) nach Anspruch 6, **dadurch gekennzeichnet, dass** die Förderleitung (4) zwischen dem Materialtank (3) und der Verteileinrichtung mit einer rutschfördernden Innenoberfläche gebildet ist.

8. Landwirtschaftliche Maschinenkombination (1) nach mindestens einem der vorangehenden Ansprüche, **dadurch gekennzeichnet, dass** der starre Leitungsrohrabschnitt (8) mit Rohrabschnitten mehrstückig gebildet ist, die starr miteinander verbunden sind.

9. Landwirtschaftliche Maschinenkombination (1) nach mindestens einem der vorangehenden Ansprüche, **dadurch gekennzeichnet, dass** zwischen einem heckseitigen Ende (6) des starren Leitungsrohrabschnitts (8) und einem der Förderleitung (4) zugeordneten Materialeingang der Verteilmaschine ein flexibler Leitungsrohrabschnitt der Förderleitung (4) angeordnet ist.

10. Landwirtschaftliche Maschinenkombination (1) nach mindestens einem der vorangehenden Ansprüche, **dadurch gekennzeichnet, dass** der starre Leitungsrohrabschnitt (8) gebildet ist mit
- einem vom Materialausgang (5) des Materialtanks (3) ausgehenden tankseitigen starren Leitungsrohrabschnitt, welcher an dem Materialtank (3) und / oder einem Tragrahmen des Materialtanks (3) gehalten wird, und
- einem hiermit starr verbundenen schlepperseitigen starren Anschlussrohrabschnitt, welcher mittels der Befestigungseinrichtung (10) am Ackerschlepper (2) gehalten wird.

11. Landwirtschaftliche Maschinenkombination (1) nach mindestens einem der vorangehenden Ansprüche, **dadurch gekennzeichnet, dass** die Verteilmaschine von einer Maschinenart aus der folgenden Gruppe ist: Düngerstreuer, Sämaschine und Sprühmaschine.

## Claims

1. An agricultural machine combination (1), with:
- a tractor (2);
- a spreader, having
- a material tank (3), which is arranged at the front of the tractor (2) and is configured to receive a material to be spread;
- a spreading device, which is arranged at the rear of the tractor (2) and is configured to spread the material to be spread; and
- a conveyor line (4), which is arranged between the material tank (3) and the spreading device and through which the material to be spread is conveyable from the material tank (3) to the spreading device; and
- a holding and lifting device (7), with which the material tank (3) is held at the front of the tractor (2) in such a way that the material tank (3) is movable into different height positions above the ground by means of the holding and lifting device (7);
**characterized in that** a rigid pipe section (8) of the conveyor line (4) is fastened by means of a fastening device (10) in a mounting area (9) on the tractor (2) in such a way that the rigid pipe section (8) is both pivotable and displaceable in the longitudinal direction of the rigid pipe section (8) relative to the mounting area (9) if the material tank (3) is moved between different height positions by means of the holding and lifting device (7).

2. The agricultural machine combination (1) according to claim 1, **characterized in that** the rigid pipe section (8) is rigidly connected to a material outlet (5) of the material tank (3) associated with the conveyor line (4).

3. The agricultural machine combination (1) according to claim 1 or 2, **characterized in that** the fastening device (10) is arranged in a mounting area (9) on a driver's cab (13) of the tractor (2).

4. The agricultural machine combination (1) according to at least one of the preceding claims, **characterized in that** the rigid pipe section (8) is formed with a kinked section (11).

5. The agricultural machine combination (1) according to at least one of the preceding claims, **characterized in that** the rigid pipe section (8) is designed to completely cover an area of the conveyor line (4) between the material outlet and the mounting area (9).

6. The agricultural machine combination (1) according to at least one of the preceding claims, **characterized in that** the conveyor line (4) is formed with a slippery inner surface at least along the rigid pipe section (8).

7. The agricultural machine combination (1) according to claim 6, **characterized in that** the conveyor line (4) is formed with a slippery inner surface between the material tank (3) and the spreading device.

8. The agricultural machine combination (1) according to at least one of the preceding claims, **characterized in that** the rigid pipe section (8) is formed in several pieces with pipes sections that are rigidly connected to one another.

9. The agricultural machine combination (1) according to at least one of the preceding claims, **characterized in that** a flexible pipe section of the conveyor line (4) is arranged between a rear end (6) of the rigid pipe section (8) and a material inlet of the spreader associated with the conveyor line (4).

10. The agricultural machine combination (1) according to at least one of the preceding claims, **characterized in that** the rigid pipe section (8) is formed with
- a rigid pipe section on the tank side extending from the material outlet (5) of the material tank (3), which is held on the material tank (3) and/or on a support frame of the material tank (3), and
- a rigid connecting pipe section on the tractor side rigidly connected thereto, which is held on the tractor (2) by means of the fastening device (10).

11. The agricultural machine combination (1) according to at least one of the preceding claims, **characterized in that** the spreader is a type of machine from the following group: fertilizer spreader, seed drill and spraying machine.

## Revendications

1. Machine agricole (1) mixte, comprenant :
- un tracteur agricole (2) ;
- une distributrice, comportant
- un réservoir de matière (3), qui est placé sur la face frontale du tracteur agricole (2) et qui est aménagé pour recevoir une matière à distribuer ;
- un système distributeur, qui est placé sur l'arrière du tracteur agricole (2) et qui est aménagé pour épandre la matière à distribuer ; et
- un conduit de transport (4), qui est placé entre le réservoir de matière (3) et le système distributeur et à travers lequel la matière à distribuer est transportable du réservoir de matière (3) vers le système distributeur ; et
- un système de maintien et de levage (7), à l'aide duquel le réservoir de matière (3) est maintenu sur la face frontale du tracteur agricole (2), de telle sorte que le réservoir de matière (3) soit déplaçable au moyen du système de maintien et de levage (7) dans différentes positions en hauteur au-dessus du sol ;
**caractérisée en ce qu'**un tronçon tubulaire (8) de conduit rigide du conduit de transport (4) est fixé au moyen d'un système de fixation (10) dans une zone de montage (9) sur le tracteur agricole (2), de telle sorte que le tronçon tubulaire (8) de conduit rigide soit aussi bien susceptible de pivoter par rapport à la zone de montage (9) que déplaçable dans la direction longitudinale du tronçon tubulaire (8) de conduit rigide, lorsque l'on déplace le réservoir de matière (3) au moyen du système de maintien et de levage (7) entre différentes positions en hauteur.

2. Machine agricole (1) mixte selon la revendication 1, **caractérisée en ce que** le tronçon tubulaire (8) de conduit rigide est rigidement assemblé avec une sortie de matière (5) du réservoir de matière (3) associée au conduit de transport (4).

3. Machine agricole (1) mixte selon la revendication 1 ou 2, **caractérisée en ce que** le système de fixation (10) est placé dans une zone de montage (9) sur une cabine conducteur (13) du tracteur agricole (2).

4. Machine agricole (1) mixte selon au moins l'une quelconque des revendications précédentes, **caractérisée en ce que** le tronçon tubulaire (8) de conduit rigide est conçu avec un tronçon infléchi (11).

5. Machine agricole (1) mixte selon au moins l'une quelconque des revendications précédentes, **caractérisée en ce que** le tronçon tubulaire (8) de conduit rigide est conçu de manière à recueillir totalement une zone du conduit de transport (4) entre la sortie de matière et la zone de montage (9).

6. Machine agricole (1) mixte selon au moins l'une quelconque des revendications précédentes, **caractérisée en ce qu'**au moins le long du tronçon tubulaire (8) de conduit rigide, le conduit de transport (4) est conçu avec une surface inférieure favorisant le glissement.

7. Machine agricole (1) mixte selon la revendication 6, **caractérisée en ce qu'**entre le réservoir de matière (3) et le système distributeur, le conduit de transport (4) est conçu avec une surface inférieure favorisant le glissement.

8. Machine agricole (1) mixte selon au moins l'une quelconque des revendications précédentes, **caractérisée en ce que** le tronçon tubulaire (8) de conduit rigide est conçu en plusieurs éléments, de tronçons tubulaires qui sont rigidement assemblés les uns avec les autres.

9. Machine agricole (1) mixte selon au moins l'une quelconque des revendications précédentes, **caractérisée en ce qu'**entre une extrémité (6) côté arrière du tronçon tubulaire (8) de conduit rigide et une entrée de matière de la distributrice qui est associée au conduit de transport (4) est placé un tronçon tubulaire souple du conduit de transport (4).

10. Machine agricole (1) mixte selon au moins l'une quelconque des revendications précédentes **caractérisée en ce que** le tronçon tubulaire (8) de conduit rigide est constitué avec
- un tronçon de conduit tubulaire rigide, côté réservoir, partant de la sortie de matière (5) du réservoir de matière (3), lequel est maintenu sur le réservoir de matière (3) et / ou sur un châssis de support du réservoir de matière (3), et
- un tronçon tubulaire de raccordement côté tracteur, rigidement assemblé avec ce dernier, lequel est maintenu au moyen du système de fixation (10) sur le tracteur agricole (2).

11. Machine agricole (1) mixte selon au moins l'une quelconque des revendications précédentes, **caractérisée en ce que** la distributrice est d'un type de machine du groupe suivant : épandeur d'engrais, machine à semer et machine de pulvérisation.
